# EUROPÄISCHE PATENTSCHRIFT

(11) **EP 0 295 415 B1**
(45) Veröffentlichungstag und Bekanntmachung des Hinweises auf die Patenterteilung: **09.03.1994**
(21) Anmeldenummer: 88107303.5
(22) Anmeldetag: 06.05.1988
(51) Int. Cl.: H02H 3/33, H02H 7/122, H02H 7/08

(54) **Schaltungsanordnung zum Schutz gegen Fehlerströme**
Circuit for protection against fault currents
Circuit de protection contre les courants de défaut

(30) Priorität: 19.06.1987 DE 3720312
(43) Veröffentlichungstag der Anmeldung: 21.12.1988
(73) Patentinhaber: Festo KG, D-73734 Esslingen (DE)
(72) Erfinder: Fetzer, Gerhard, D-7306 Denkendorf (DE); Behrens, Axel, D-7306 Denkendorf (DE)
(74) Vertreter: Vetter, Hans, Dipl.-Phys. Dr.

(56) Entgegenhaltungen:
- EP-A- 0 087 697
- DE-A- 3 527 854
- GB-A- 2 181 599

## Beschreibung

Die Erfindung betrifft eine Schaltungsanordnung zum Schutz gegen Fehlerströme gemäß Oberbegriff des Anspruchs 1.

Fehlerströme entstehen in defekten Geräten mit und ohne Erdung und können für die Benutzer oder Betreiber gefährlich werden. Das Auftreten von Fehlerströmen äußert sich beispielweise durch unterschiedliche Stromwerte in den beiden ansonsten symmetrisch beaufschlagten Stromzuführungsleitungen zum jeweiligen Gerät.

Derartige Schaltungsanordnungen zum Schutz gegen Fehlerströme sind beispielsweise aus der DE-A 30 48 785 und der DE-A 36 33 787 (GB-A 2 181 599) bekannt. Diese bekannten Schaltungsanordnungen sind in den Netzspannungszuleitungen eines elektrischen Geräts diesem vorgeschaltet und unterbrechen beim Auftreten eines Fehlerstroms eine der spannungszuführenden Leitungen. Bei der Einrichtung gemäß der GB-A 2 181 599 ist zwar ein Gleichstromnetzteil vorhanden, dieses wird jedoch nicht von der Fehlerstromschutzschaltung überwacht. Zum Schutz gegen Fehlerströme für Stromversorgungseinrichtungen mit Energiespeicher sind die bekannten Anordnungen nicht geeignet. Durch den Energiespeicher besteht nämlich die Gefahr, daß der damit verbundene Verbraucher auch nach Abschalten der Stromversorgungseinrichtung noch mit gefährlichen Spannungen beaufschlagt wird und daß der Verbraucher infolge der gespeicherten Energie noch unkontrollierte Bewegungen ausführt. Die bekannte Unterbrechung der Stromzuführung vor einem Gleichstromnetzteil gewährleistet im Fehlerfalle nicht das schnelle Abschalten der Spannung am Ausgang, beispielsweise eines Frequenzumrichters, da im Zwischenkreiskondensator des Gleichspannungsnetzteils eine beträchtliche Energie gespeichert ist. Die Reproduzierbarkeit und exakte Durchführung der Abschaltfunktion stellt bei den bekannten Schaltungsanordnungen insbesondere dann ein Problem dar, wenn strenge gesetzliche Vorschriften oder der Wunsch nach größerer Sicherheit bestehen.

Aus der EP-A-0 087 697 ist eine Überstromschutzschaltung für ein mit Invertern versehenes Netzteil bekannt. Bei einem Überstrom in einem Inverter wird dieser vom Verbraucher abgetrennt, der ein Drehstrommotor sein Kann, damit die im Motor gespeicherte Energie nicht zu einer Zerstörung des Inverters führt. Eine Fehlerstromüberwachung, die den Verbraucher und sein Gleichstromnetzteil überwacht, ist dagegen nicht vorgesehen.

Der Erfindung liegt daher die Aufgabe zugrunde, eine Schaltungsanordnung zum Schutz gegen Fehlerströme der eingangs genannten Gattung zu schaffen, durch die bei am Eingang der Stromversorgungseinrichtung erfaßtem Differenzstrom sowohl der Verbraucher, als auch seine Versorgung mit Gleichstromnetzteil überwacht trotz der gespeicherten Energie eine sichere und schnelle Abshaltung des Verbrauchers gewährleistet ist.

Diese Ausgabe wird erfindungsgemäß durch die im Anspruch 1 angegebenen Merkmale gelöst

Durch die Unterbrechung aller Schaltsrecken unmittelbar vor dem Verbraucher kann sich die gespeicherte Energie nicht mehr auf diesen auswirken, so daß eine sehr sichere und sehr schnelle Abschaltung des Verbrauchers gewährleistet ist. Gesetzliche Vorschriften, die eine Abschaltung des Verbrauchers innerhalb einer Zeitspanne von 0.2 Sekunden fordern, Können dadurch, leicht erfüllt werden.

Durch die in den Unteransprüchen aufgeführten Maßnahmen sind vorteilhafte Weitebildungen und Verbesserungen der im Anspruch 1 angegebenen Schaltungsanordnung möglich.

Eine besonders hohe Schaltgenauigkeit kann dadurch erreicht werden, daß die in der Differenzstrom-Meßwicklung induzierte Spannung einer Schwellwertstufe zugeführt wird, durch deren Ausgangssignal ein Fehlerspeicher über einen Schalteingang von einem ersten Schaltzustand in einen zweiten Schaltzustand umschaltbar ist, und daß durch den Fehlerspeicher in seinem zweiten Schaltzustand die Stromunterbrechungsvorrichtung auslösbar ist, Durch die Schwellwertstufe Kann ein exakter und reproduzierbarer zuverlässiger Grenzwert für Fehlerströme vorgegeben werden, der unabhängig von der Ansprechschwelle der gewöhnlich als Schaltrelais ausgebildeten Stromunterbrechungsvorrichtung ist. Durch den Fehlerspeicher wird das Auftreten eines Fehlerstroms gespeichert, so daß die Stromzuführungsleitung auch unterbrochen bleibt, wenn der Fehlerstrom nur Kurzzeitig auftrat. Dies führt zu einer Erhöhung der Sicherheit, da auch Kurzzeitig auftretende Fehlerströme zu einer Gefährdung führen Können. Erst nach Beseitigung der Ursachen von Kurzzeitig auftretenden Fehlerströmen Kann die Unterbrechung von Stromzuführungsleitungen wieder aufgehoben werden.

Durch die Verwendung zweier Schwellwertschalter in der Schwellwertstufe, die den beiden möglichen Fehlerstromrichtungen zugeordnet ist, Können Fehlerströme in beiden Stromrichtungen zuverlässig und gleichwertig erfaßt werden.

Als Fehlerspeicher eignet sich vor allem eine bistabile Schaltstufe, die insbesondere als RS-Flipflop ausgebildet ist. Zur automatischen und gezielten Wiederinbetriebsetzung des geschützten elektrischen Geräts eignet sich eine den Fehlerspeicher in seinen ersten Schaltzustand bei Wiedereinschalten der Versorgungsspannung rücksetzende Triggerschaltung. Durch Aus- und Einschalten des Geräts oder durch Herausziehen und Wiedereinstecken des Netzsteckers kann dadurch auf einfache Weise eine Umschaltung des Fehlerspeichers zum Zwecke der Wiederinbetriebsetzung des Geräts erreicht werden. Liegt die Ursache für den Fehlerstrom noch vor, so erfolgt dann selbstverständlich automatisch wieder eine erneute Umschaltung des Fehlerspeichers. Selbstverständlich kann das automatische Schließen der unterbrochenen Schaltstrecken beim Wiedereinschalten auch durch andere Mittel erfolgen.

Die angegebene Schaltungsanordnung kann auf einfache Weise mit geringem Aufwand durch eine Spannungsüberwachungsschaltung für wenigstens eine der vorkommenden Spannungen ergänzt werden, indem der Ausgang der Spannungsüberwachungsschaltung mit dem Schalteingang des Fehlerspeichers verbunden wird. Bei einer vorgebbaren Spannungsabweichung einer dieser Spannungen wird an diesem Ausgang dann ein den Fehlerspeicher umschaltendes Abschaltsignal erzeugt. Auf diese Weise kann insbesondere die gleichgerichtete Versorgungsspannung und oder wenigstens eine Hilfsspannung überwacht werden, so daß stets die Sicherheit der Fehlerstromschutzanordnung und -abschaltung und auch ein zusätzlicher Schutz der elektronischen Bauteile und ein Schutz gegen Brandgefahr gewährleistet sind, wobei hierzu unter Verwendung einer Vielzahl ohnehin vorhandener Baugruppen lediglich noch ein Spannungskomparator hinzugefügt werden muß.

Zum Schutz gegen Fehlerströme bei einer Anordnung von mit Drehstrommotoren verbundenen Frequenzumrichtern, die ein Gleichstromnetzteil aufweisen, weist die Stromunterbrechungsvorrichtung zweckmäßigerweise zusätzliche Mittel zur Stromunterbrechung wenigstens einer Stromversorgungsleitung im Gleichstromnetzteil auf. Dies dient zum Schutz nicht nur einer Bedienungsperson eines mit einem Drehstrommotor versehenen Handwerkszeugs, sondern auch zum Schutz der Schaltungen selbst. Eine weitere Erhöhung der Sicherheit kann noch dadurch erreicht werden, daß die Stromunterbrechungsvorrichtung Mittel zu zusätzlichen Sperrung oder Unterdrückung von Steuerimpulsan für die im Frequenzumrichter vorgesehenen Halbleiterschalter aufweist, insbesondere für die Leistungshalbleiterschalter, wodurch die Spannungsabschaltung wesentlich beschleunigt wird.

Die Wicklungsenden der beiden Meßwicklungen sind jeweils in vorteilhafter Weise über einen Kondensator miteinander verbunden, so daß diese Anordnung zusätzlich auch zu Entstörzwecken dienen kann. Durch große Kondensatoren kann eine gute Entstörung auch bei keinen Wicklungen erreicht werden. Die Sättigungsgefahr wird verringert. und es kann eine gleichmäßige Strombelastung erreicht werden.

Ein Ausführungsbeispiel der Erfindung ist in der Zeichnung dargestellt und in der nachfolgenden Beschreibung näher erläutert. Es zeigen:
Fig. 1 ein Ausführungsbeispiel einer Schaltungsanordnung zum Schutz gegen Fehlerströme an einem mit einem Drehstrommotor verbundenen Frequenzumrichter und
Fig. 2 eine konstruktive Ausgestaltung der Sensoranordnung.

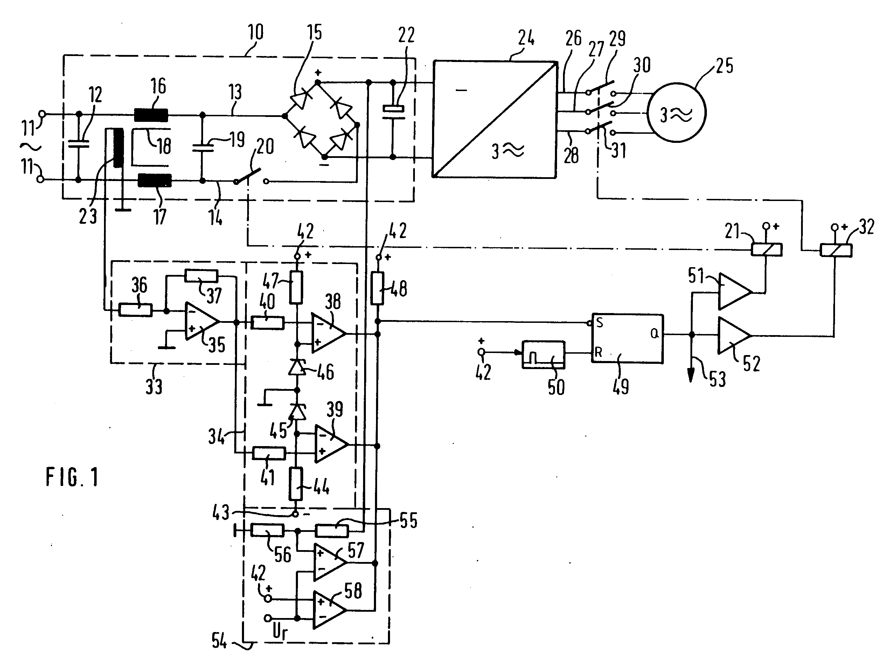

Bei der in Fig. 1 dargestellten Schaltungsanordnung ist ein Gleichstromnetzteil 10 über zwei Klemmen 11 mit der Netzwechsalspannung verbindbar. Die über einen ersten Kondensator 12 miteinander verbundenen Klemmen 11 sind über zwei Stromzuführungsleitungen 13,14 mit zwei Wechsel spannungsanschlüssen eines aus vier Gleichrichterdioden bestehenden Brückengleichrichters 15 verbunden. In die Stromzuführungsleitungen 13, 14 sind zwei symmetrische Differenzdrosseln 16,17 geschaltet, die einen gemeinsamen Eisenkern 18 aufweisen. Ihre mit dem Brückengleichrichter 15 verbundenen Anschlüsse sind über einen zweiten Kondensator 19 miteinander verbunden. In der unteren Stromzuführungsleitung 14 zum Brückengleichrichter 15 ist eine Schaltstrecke 20 eines ersten Relais 21 geschaltet. Die beiden Gleichspannungsanschlüsse des Brückengleichrichters 15 sind über einen Glättungskondensator 22 miteinander verbunden. Der gemeinsame Eisenkern der Differenzdrosseln 16, 17 trägt eine dritte, als Differenzstrom-Meßwicklung 23 dienende Wicklung.

Die beiden Differenzdrosseln 16, 17 und die beiden Kondensatoren 12, 19 dienen zur Entstörung und sind unabhängig von einer Fehlerstrom-Sicherheitsschaltung in jedem Falle vorgesehen. Durch die Anbringung der Differenzstrom-Meßwicklung 23 dienen die Differenzcrosseln jedoch zusätzlich noch als Teil eines Fehlerstrom-Sensors.

Der im Gleichstromnetzteil 10 erzeugte Gleichstrom wird einem Frequenzumrichter 24 zugeführt, wo er in einen Drehstrom variabler Frequenz und Amplitude zum Betrieb eines nachgeschalteten Drehstrommotors 25 umgewandelt wird. Eine derartige Anordnung eignet sich insbesondere zum Betrieb von elektrischen Handwerkzeugen und ist beispielsweise aus der DE-OS 32 47 046 und der DE-OS 37 09 983 bekannt und dort näher beschrieben.

Drei Stromzuführungsleitungen 26-28 zum Drehstrommotor 25 sind durch drei Schaltstrecken 29-31 eines zweiten Relais unterbrechbar.

Zur Fehlerstromabschaltung ist ein Anschluß der Differenz strom-Meßwicklung 23 über einen Verstärker 33 mit einer Schwellwertstufe 34 verbunden, während der zweite Anschluß dieser Differenzstrom-Meßwicklung 23 an Masse liegt. Der Verstärker 33 besteht im wesentlichen aus einem Operationsverstärker 35, dessen nicht invertierender Eingang an Masse liegt, während der invertierende Eingang mit einem Eingangswiderstand 36 sowie über einen Rückkopplungswiderstand 37 mit dem Ausgang verbunden ist.

Die Schwellwertstufe 34 besteht aus zwei Schwellwertschaltern, für die jeweils ein Operationsverstärker 38, 39 vorgesehen ist, deren miteinander verbundene Ausgänge den Ausgang der Schwellwertstufe 34 bilden. Der Ausgang des Verstärkers 33 ist dabei über einen Eingangswiderstand 40 mit dem invertierenden Eingang des Operationsverstärkers 38 und über einen Eingangswiderstand 41 mit dem nicht invertierenden Eingang des Operationsverstärkers 39 verbunden. Eine gegenüber Masse symmetrische Hilfsspannungsquelle, die in nicht dargestellter Weise vorzugsweise aus der Gleichspannung des Gleichstromnetzteils 10 abgeleitet und stabilisier ist, weist einen positiven Pol 42 und einen negativen Pol 43 auf. Eine Reihenschaltung aus einem Widerstand 44, zwei Z-Dioden 45, 46 und einem Widerstand 47 ist zwischen den negativen Pol 43 und den positiven Pol 42 geschaltet. Der Verknüpfungspunkt zwischen den beide Z-Dioden 45,46 liegt an Masse, während der Verknüpfungspunkt zwischen dem Widerstand 44 und der Z-Diode 45 mit dem invertierenden Eingang des Operationsverstärkers 39 und der Verknüpfungspunkt zwischen der Z-Diode 46 und dem Widerstand 47 mit dem nicht invertierenden Eingang des Operationsverstärkers 38 verbunden ist.

Der Ausgang der Schwellwertstufe 34 ist sowohl über einen Widerstand 48 mit dem positiven Pol 42 als auch mit dem Setzeingang S eines RS-Flipflops 49 verbunden, das als digitaler Fehlerspeicher verwendet wird. Der positive Pol 42 der Hilfsspannungsquelle ist über eine Triggerschaltung 50 mit dem Rücksetzeingang R dieses Flipflops 49 verbunden. Der Eingang der Triggerschaltung 50 kann alternativ oder über eine nicht dargestellte UND-Verknüpfung durch die Gleichspannung des Gleichstromnetzteils 10 oder eine weitere Hilfsspannung beaufschlagt sein. Die Triggerschaltung 50 erzeugt in bekannter Weise ein Ausgangssignal, wenn eine eingangsseitige Spannungsflanke vorliegt.

Der Ausgang Q steuert über je einen Verstärker 51, 52 die beiden Relais 21, 32. Weiterhin wird die Ausgangsspannung des Flipflops 49 über eine Steuerleitung 53 den Halbleiterschaltern, insbesondere den Leistungshalbleiterschaltern im Frequenzumrichter 24, in dem Sinne zugeführt, daß diese bei Auftreten eines Fehlerstroms gesperrt werden.

Der Ausgang einer Spannungsüberwachungsschaltung 54 ist ebenfalls mit dem Setzeingang S des Flipflops 49 verbunden. Ein aus zwei Widerständen 55, 56 bestehender Spannungsteiler ist zwischen den positiven Pol des Gleichstromnetzteils 10 und Masse geschaltet. Der Verknüpfungspunkt zwischen den beiden Widerständen 55, 56 ist mit dem nicht invertierenden Eingang eines als Spannungskomparator geschalteten Operationsverstärkers 57 verbunden, an dessen invertierenden Eingang eine Referenzspannung Uᵣ gelegt ist. Der nicht invertierende Eingang eines zweiten, ebenfalls als Spannungskomparator geschalteten Operationsverstärkers 58 ist mit dem positiven Pol 42 der Hilfsspannungsquelle verbunden, während der invertierende Eingang mit der Referenzspannung Uᵣ beaufschlagt ist. Die Ausgänge der beiden Operationsverstärker 57, 58 sind miteinander verbunden und bilden den Ausgang der Spannungsüberwachungsschaltung 54.

Die Wirkungsweise der dargestellten Schaltungsanordnung besteht darin, daß sich die Ströme durch die beiden Differenzdrosseln 16, 17 im Normalfall kompensieren, so daß in der Differenzstrom-Meßwicklung 23 keine Spannung induziert wird. In diesem Fall sind die Schaltstrecken 20, 29, 30, 31 geschlossen. Tritt ein Fehlerstrom im Gleichstromnetzteil 10, im Frequenzumrichter 24 oder im Drehstrommotor 25 auf, so wird der Stromfluß durch die Differenzdrosseln 16, 17 asymmetrisch, und es wird eine Spannung in der Differenzstrom-Meßwicklung 23 induziert, die dann im Verstärker 33 in der erforderlichen Weise verstärkt wird. Dieses verstärkte Signal wird den beiden als Schweilwertschalter geschalteten Operationsverstärkern 38,39 zugeführt, von denen einer ein Ausgangssignal abgibt, wenn ein positiver Fehlerstrom einen vorgegebenen oberen Grenzwert überschreitet und von denen der andere ein Fehlersignal abgibt, wenn ein negativer Fehlerstrom einen unteren vorgegeben Grenzwert überschreitet. Auf diese Weise können Fehlerströme beider Polaritäten überwacht werden. Die Grenz- bzw. Schwellwerte werden dabei jeweils von den Z-Dioden 45, 46 vorgegeben. Bei Auftreten eines derartigen Fehlersignals wird das Flipflops 49 über seinen Setzeingang S von einem ersten in einen zweiten Schaltzustand gesetzt. Das hierdurch erzeugte Ausgangssignal schaltet über die Verstärker 51, 52 die beiden Relais 21, 32 ab, so daß die Schaltstrecken 20, 29, 30, 31 geöffnet werden wodurch eine Abschaltung der gesamten Anlage erfolgt. Zur Erhöhung der Sicherheit werden noch über die Steuerleitung 53 wenigstens die Leistungshalbleiterschalter im Frequenzumrichters 24 in den stromsperrenden Zustand versetzt. Ist die Ursache für den Fehlerstrom beseitigt, so wird beim Wiedereinschalten des Gleichstromnetzteils 10 der positive Pol 42 mit Spannung versorgt, so daß über die Triggerschaltung 50 das Flipflop 49 rückgesetzt wird. Dies wiederum bewirkt eine Erregung der beiden Relais 21, 32 und ein Schließen der entsprechenden Schaltstrecken 20, 29, 30, 31.

Bei einem Ausfall oder einer unzulässigen Veränderung der Netz- und Hilfsspannung wird über die Spannungsüberwachungsschaltung 54 das Flipflop 49 entsprechend in dem Sinne betätigt, daß die beiden Relais 21, 32 abfallen, so daß wiederum der Frequenzumrichter vom Netz getrennt und der Ausgang des Frequenzumrichters spannungsfrei geschaltet ist. Dabei überwacht der Operationsverstärker 57 die Gleichspannung des Gleichstromnetzteils 10 durch Vergleich mit einer Referenzspannung Uᵣ, während der Operationsverstärker 58 einen entsprechenden Vergleich mit der Hilfsspannung durchführt.

Beim dargestellten Ausführungsbeispiel erfolgt lediglich eine Abschaltung bei einem Ausfall oder einem Absinken der Netz- oder Hilfsspannung. Es ist selbstverständlich auch möglich, eine unzulässige Spannungserhöhung zusätzlich zu überwachen, beispielsweise mittels Fensterkomparatoren.

Das Rücksetzen des Flipflops 49 kann selbstverständlich auch über einen entsprechenden Schalter alternativ oder zusätzlich erfolgen.

Es ist ebenfalls möglich, anstelle der dargestellten Schaltungsanordnung einen integrierten Schaltkreis oder einen Mikrorechner zu verwenden. Im Mikrorechner kann dann beispielsweise neben dar Überwachungsschaltung noch die Steuerschaltung für den Leistungsteil des Frequenzumrichters 24 enthalten sein.

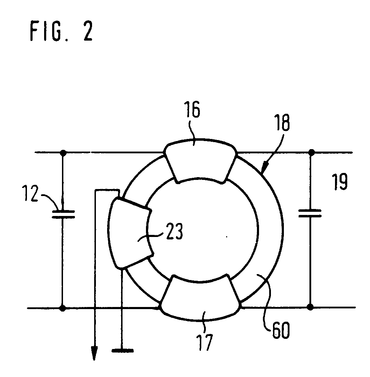

In Fig. 2 ist eine konstruktive Ausgestaltung des in Fig. 1 schematisch dargestellten Fehlerstromsensors abgebildet. Die beiden Differenzdrosseln 16, 17 sowie die Differenzstrom-Meßwicklung 23 sind auf einem Ringkern 60 angeordnet. Selbstverständlich kann prinzipiell auch ein anderer offener oder vorzugsweise geschlossener Eisenkern verwendet werden.

Die beschriebene Schaltungsanordung eignet sich insbesondere zum Fehlerstromschutz für Frequenzumrichter, die mit Drehstrommotoren verbunden sind, darüber hinaus ist jedoch auch ein Einsatz für andere elektronische Geräte möglich. Vor allem bei beweglichen Systemen, insbesondere tragbaren Geräten, ist eine derartige Schaltungsanordnung von besonderer Bedeutung, da dort die Möglichkeiten einer Erdung der einzelnen Komponenten eingeschränkt sind.

## Patentansprüche

1. Schaltungsanordnung zum Schutz gegen Fehlerströme in Anlagen, die Stromversorgungseinrichtungen mit Energiespeicher aufweisen, mit zwei in zwei Wechselstromzuführungsleitungen geschalteten, identischen Meßwicklungen, wobei durch einen mit diesen Meßwicklungen gekoppelten Differenzstrom-Sensor bei Überschreitung eines vorgebbaren Meßwertes eine Stromunterbrechungsvorricntung auslösbar ist, dadurch gekennzeichnet, daß die Stromversorgungseinrichtung aus einem Gleichstromnetzteil (10) und einem nachgeschalteten Frequenzumrichter (24) zum Betrieb von Drehstrommotoren besteht, daß die Schaltungsanordnung in den Wechselstromzuführungsleitungen (13, 14) zum Gleichstromnetzteil (10) geschaltet ist daß die Stromunterbrechungsvorrichtung (21, 32) alle Versorgungsleitungen (26, 27, 28) zwischen dem Frequenzumrichter (24) und einem angeschlossenen Drehstrommotor (25) unterbrechende Schaltstrecken (29, 30, 31) aufweist, und daß der Differenzstrom-Sensor eine Meßwicklung (23) ist

2. Schaltanordnung nach Anspruch 1, dadurch gekennzeichnet, daß die in der Differenzstrom-Meßwicklung (23) induzierte Spannung einer Schwellwertstufe 34 zugeführt wird, durch deren Ausgangssignal ein Fehlerspeicher (49) über einen Schalteingang (S) von einem ersten Schaltzustand in einen zweiten Schaltzustand umschaltbar ist, und daß durch den Fehlerspeicher (49) in seinem zweiten Schaltzustand die Stromunterbrechungsvorrichtung (21,32) auslösbar ist.

3. Schaltungsanordnung nach Anspruch 2, dadurch gekennzeichnet, daß die Schwellwertstufe (34) zwei Schwellwertschalter (38,39) aufweist, die den beiden möglichen Fehlerstromrichtungen zugeordnet sind.

4. Schaltungsanordnung nach Anspruch 2 oder 3, dadurch gekennzeichnet, daß der Fehlerspeicher (49) als bistabile Schaltstufe, insbesondere als RS-Flipflop, ausgebildet ist.

5. Schaltungsanordnung nach einem der vorhergehenden Ansprüche, dadurch gekennzeichnet, daß eine auch nach vorherigem Ansprechen der Stromunterbrechungsvorrichtung (21,32) beim Wiedereinschalten der Versorgungsspannung alle unterbrochenen Schaltstrecken Schließende Vorrichtung (50) vorgesehen ist.

6. Schaltungsanordnung nach Anspruch 5, dadurch gekennzeichnet, daß die den Fehlerspeicher (49) in seinen ersten Schaltzustand bei Wiedereinschalten der Versorgungsspannung rücksetzende Vorrichtung (50) als Triggerschaltung ausgebildet ist.

7. Schaltungsanordnung nach einem der vorhergehenden Ansprüche, dadurch gekennzeichnet, daß eine Spannungsüberwachungsschaltung (54) für wenigstens eine der vorkommenden Spannungen vorgesehen ist, deren bei einer vorgebbaren Spannungsabweichung einer dieser Spannungen mit einem Abschaltsignal beaufschlagter Ausgang mit dem Schalteingang (S) des Fehlerspeichers (49) verbunden ist.

8. Schaltungsanordnung nach Anspruch 7, dadurch gekennzeichnet, daß die gleichgerichtete Versorgungsspannung und/oder wenigstens eine Hilfsspannung überwacht wird.

9. Schaltungsanordnung nach einem der vorhergehenden Ansprüche, dadurch gekennzeichnet, daß ein die induzierte Spannung in der Differenzstrom-Meßwicklung (23) anhebender Verstärker (33) vorgesehen ist.

10. Schaltungsanordnung nach einem der vorhergehenden Ansprüche, dadurch gekennzeichnet, daß die Stromunterbrechungsvorrichtung (21,32) zusätzlich Mittel zur Stromunterbrechung wenigstens einer Stromversorgungsleitung (14) im Gleichstromnetzteil (10) aufweist.

11. Schaltungsanordnung nach einem der vorhergehenden Ansprüche, dddurch gekennzeichnet, daß die Stromunterbrechungsvorrichtung (32,21) wenigstens ein Relais enthält.

12. Schaltungsanordnung für Frequenzumrichter nach einem der vorhergehenden Ansprüche, dadurch gekennzeichnet, daß die Stromunterbrechungsvorrichtung (21,32) Mittel (53) zur zusätzlichen Sperrung oder Unterdrückung von Steuerimpulsen für Halbleiterschalter im Frequenzumrichter aufweist, insbesondere für Leistungsschalter.

13. Schaltungsanordnung nach einem der vorhergehenden Ansprüche, gekennzeichnet durch die Ausbildung als Mikrorechner, der vorzugsweise zusätzlich die Steuerfunktionen für den Frequenzumrichter (24) enthält.

14. Schaltungsanordnung nach einem der vorhergehenden Ansprüche, dadurch gekennzeichnet, daß die Wicklungsenden der beiden Meßwicklungen (16,17) jeweils über einen Kondensator (12,19) miteinander verbunden sind.

## Claims

1. Circuitry to protect against fault currents in installations which have power supply equipment with energy stores, with two identical measuring coils connected in two alternating current feed lines, wherein a circuit breaker can be triggered by a differential current sensor coupled to these measuring coils, if a prescribed measured value is exceeded, characterized in that the circuit breaker is comprised of a direct current supply unit (10) and a downstream frequency converter (24) for the operation of three-phase current motors, that the circuitry is connected in the alternating current feed lines (13, 14) to the direct current supply unit (10), that the circuit breaker (21, 37) has contact-breaker distances (29, 30, 31) cutting off all supply lines (26, 27, 28) between the frequency converter (24) and a connected three-phase motor (25), and that the differential current sensor is a measuring coil (23).

2. Circuitry according to claim 1, characterized in that the voltage induced in the differential current measuring coil (23) is fed to a threshold stage (34), the output signal of which can switch over a fault memory (49), via a switching input (S), from a first switching condition to a second switching condition, and that in its second switching condition, the circuit breaker (21, 32) can be triggerd by the fault memory (49).

3. Circuitry according to claim 2, characterized in that the threshold stage (34) has two threshold switches (38, 39), assigned to the two possible fault current directions.

4. Circuitry according to claims 2 or 3, characterized in that the fault memory (49) is in the form of a bistable switching stage, in particular an RS flipflop.

5. Circuitry according to any of the preceding claims, characterized in that a device (50) is provided which, even after prior operation of the circuit breaker (21, 32), closes all interrupted contact-break gaps if the supply voltage is restored.

6. Circuitry according to claim 5, characterized in that the device (50) which resets the fault memory (49) to its first switching condition on restoration of the supply voltage is in the form of a trigger switch.

7. Circuitry according to any of the preceding claims, characterized in that a voltage monitoring switch (54) for one or more of the occurring voltages is provided which, in the event of a presetable voltage deviation from one of these voltages, is connected by an output subjected to a cutoff signal to the switching input (S) of the fault memory (49).

8. Circuitry according to claim 7, characterized in that the rectified supply voltage and/or one or more auxiliary voltages are monitored.

9. Circuitry according to any of the preceding claims, characterized in that an amplifier (33) raising the induced voltage in the differential current measuring coil (23) is provided.

10. Circuitry according to any of the preceding claims, characterized in that the circuit breaker (21, 32) has additional means of breaking the current of at least one power supply line (14) in the direct current supply unit (10).

11. Circuitry according to any of the preceding claims, characterized in that the contact breaker (32, 21) contains one or more relays.

12. Circuitry for frequency conversion according to any of the preceding claims, characterized in that the circuit breaker (21, 32) has means (53) for additional blocking or suppression of control pulses for semiconductor switches in the frequency converter, in particular for power switches.

13. Circuitry according to any of the preceding claims, characterized in that it is designed as a microcomputer, which preferably also contains the control functions for the frequency converter (24).

14. Circuitry according to any of the preceding claims, characterized in that the coil ends of the two measuring coils (16, 17) are each connected to one another via a capacitor (12, 19).

## Revendications

1. Circuit de protection contre les courants de défaut dans des installations qui possèdent des dispositifs d'alimentation en courant avec des accumulateurs d'énergie, pourvu de deux bobines de mesure identiques, insérées sur deux conducteurs d'alimentation en courant alternatif, un dispositif de coupure du courant pouvant être déclenché par un capteur de courant différentiel couplé à ces bobines de mesure en cas de dépassement d'une valeur de mesure prédéterminable, caractérisé en ce que le dispositif d'alimentation en courant est constitué d'un réseau à courant continu (10) et d'un convertisseur de fréquence (24), monté en aval, pour faire fonctionner des moteurs à courant alternatif triphasé, en ce que le circuit est inséré dans les conducteurs d'alimentation en courant alternatif (13, 14) menant au réseau à courant continu (10), en ce que le dispositif de coupure du courant (21, 32) présente des éléments de coupure (29, 30, 31) interrompant tous les conducteurs d'alimentation (26, 27, 28) entre le convertisseur de fréquence (24) et un moteur à courant alternatif triphasé (25) qui y est raccordé, et en ce que le capteur de courant différentiel est une bobine de mesure (23).

2. Circuit selon la revendication 1, caractérisé en ce que la tension induite dans la bobine de mesure (23) de courant différentiel est acheminée vers un étage à seuil (34), grâce au signal de sortie duquel une mémoire de défauts (49) est susceptible d'être commutée, par l'intermédiaire d'une entrée de commutation (S), d'un premier état de commutation dans un deuxième état de commutation, et en ce que le dispositif de coupure de courant (21, 32) peut être déclenché par la mémoire de défauts (49) dans son deuxième état de commutation.

3. Circuit selon la revendication 2, caractérisé en ce que l'étage à seuil (34) possède deux commutateurs de valeur de seuil (38, 39), qui sont associés aux deux sens possibles de circulation du courant de défaut.

4. Circuit selon la revendication 2 ou 3, caractérisé en ce que la mémoire de défauts (49) est conformée en étage de commutation bistable, en particulier en bascule bistable.

5. Circuit selon l'une quelconque des revendications précédentes, caractérisé en ce qu'il est prévu un dispositif (50) qui ferme tous les éléments de coupure interrompus, lorsque la tension d'alimentation est rétablie, même au cas où le dispositif de coupure de courant (21, 32) a déjà réagi précédemment.

6. Circuit selon la revendication 5, caractérisé en ce que le dispositif (50) qui fait retourner la mémoire de défauts (49) à son premier état de commutation, lorsque la tension d'alimentation est rétablie, est conformé en circuit de déclenchement.

7. Circuit selon l'une des revendications précédentes, caractérisé en ce qu'il est prévu un circuit de surveillance de la tension (54) pour au moins l'une des tensions pouvant apparaître, dont la sortie, alimentée avec un signal de coupure, en cas de modification de l'une de ces tensions, pouvant être prédéterminée, est reliée avec l'entrée de commutation (S) de la mémoire de défauts (49).

8. Circuit selon la revendication 7, caractérisé en ce que la tension d'alimentation redressée et/ou au moins une tension de secours est surveillée.

9. Circuit selon l'une quelconque des revendications précédentes, caractérisé en ce qu'il est prévu un amplificateur (33) faisant augmenter la tension induite dans la bobine de mesure du courant différentiel (23).

10. Circuit selon l'une quelconque des revendications précédentes, caractérisé en ce que le dispositif de coupure de courant (21, 32) comporte, en supplément, des moyens pour couper le courant d'au moins un conducteur d'alimentation en courant (14) dans le réseau à courant continu (10).

11. Circuit selon l'une quelconque des revendications précédentes, caractérisé en ce que le dispositif de coupure du courant (32, 21) contient au moins un relais.

12. Circuit pour convertisseur de fréquence selon l'une quelconque des revendications précédentes, caractérisé en ce que le dispositif de coupure de courant (21, 32) présente des moyens (53) servant à bloquer, de façon supplémentaire, ou à réduire les impulsions de commande pour un commutateur à semi-conducteur dans un convertisseur de fréquence, destiné en particulier aux interrupteurs de puissance.

13. Circuit selon l'une quelconque des revendications précédentes, caractérisé en ce qu'il est conformé en micro-calculateur, qui assure, en outre, les fonctions de commande pour le convertisseur de fréquence (24).

14. Circuit selon l'une quelconque des revendications précédentes, caractérisé en ce que deux extrémités des deux bobines de mesure (16, 17) sont reliées entre elles, deux à deux, au moyen de condensateurs respectifs (12, 19).
